Europäisches Patentamt

European Patent Office

Office européen des brevets

(11) Veröffentlichungsnummer: **0 281 667**
**A2**

# (12) EUROPÄISCHE PATENTANMELDUNG

(21) Anmeldenummer: 87114406.9

(51) Int. Cl.⁴: **G01N 1/28**

(22) Anmeldetag: 02.10.87

(30) Priorität: 07.03.87 DE 3707400

(43) Veröffentlichungstag der Anmeldung:
14.09.88 Patentblatt 88/37

(84) Benannte Vertragsstaaten:
AT BE CH DE ES FR GB GR IT LI LU NL SE

(71) Anmelder: Kulzer & Co. GmbH
Philipp-Reis-Strasse 8
D-6393 Wehrheim (TS.)1(DE)

(72) Erfinder: Gwinner, Lutz, Dr.
Rubensallee 99
D-6500 Mainz(DE)

(74) Vertreter: Heinen, Gerhard, Dr.
Heraeus Holding GmbH Heraeusstrasse
12-14
D-6450 Hanau am Main(DE)

(54) Form zum Einbetten von histologischen Präparaten.

(57) Es sind Formen zum Einbetten von histologischen Präparaten in Kunststoffmassen bekannt mit einer Schale, die aus lichtdurchlässigem Material besteht. Um ein leichtes Lösen der ausgehärteten Einbettmasse gleichermaßen im Bereich des Bodens und der Seitenwände und gegebenenfalls am Rand der Form zu ermöglichen, weist die Schale zumindest im Bereich des Bodens und im Bereich der sich vom Rand des Bodens erstreckenden Randfläche auf ihrer Innenseite eine Trennschicht auf, die durch eine Folie gebildet ist.

EP 0 281 667 A2

## "Form zum Einbetten von histologischen Präparaten"

Die Erfindung betrifft eine Form zum Einbetten von histologischen Präparaten in Kunststoffmassen mit einer Schale aus einem Boden und einem hochgezogenen Rand, die aus lichtdurchlässigem Material besteht.

Auf dem Gebiet der Histologie (Gewebelehre) werden mikroskopische Untersuchungen an Hart- und Weichgeweben durchgeführt. Unter "Histologie" wird auch eine analytische Verfahrenstechnik verstanden, um morphologische und histochemische Untersuchungen an entnommenen Hart-und Weichgeweben durchführen zu können. Da die Untersuchungen unter dem Mikroskop an Dünnschnitten mit einer Schichtstärke von etwa 1 μm durchgeführt werden müssen, werden die zu untersuchenden Gewebepräparaten zunächst in ein Einbettmaterial eingegossen, um von dem eingegossenen Präparat dann einen Dünnschliff oder einen dünnen Schnitt anzufertigen.

Zur Einbettung der Präparate werden Kunststoffe oder Harze verwendet, die durch Bestrahlung ausgehärtet werden.

Die Einbettmassen werden in schalenförmigen Formen aus Glas oder Kunststoff eingefüllt, die nach dem Aushärten der Einbettmaterialien zerschlagen oder zerbrochen werden, da die Einbettmassen sich ansonsten nur schwer aus den Formen lösen lassen. Außerdem werden bei solchen Formen meistens die Ränder mit dem Einbettmaterial beim Eingießen in die Form oder durch Überlaufen des Einbettmaterials benetzt, so daß auch hierdurch ein erschwertes Lösen der ausgehärten Massen aus den Formen auftritt.

Schalen in ähnlicher Form werden auch zur Züchtung von Mikroorganismen eingesetzt. Eine Kulturschale für solche Zwecke ist aus der US 4,598,050 bekannt. Die dort beschriebene Schale kann durch einen Deckel verschlossen werden; in die Schale werden mehrere Einsätze eingefügt, unter anderem zur Aufnahme eines Nährbodens.

Der vorliegenden Erfindung liegt die Aufgabe zugrunde, eine Form zum Einbetten von histologischen Präparaten in Kunststoffmassen anzugeben, bei der ein leichtes Lösen der ausgehärteten Einbettmasse gleichermaßen im Bereich des Bodens und der Seitenwände und gegebenenfalls am Rand der Form, gegeben ist.

Diese Aufgabe wird dadurch gelöst, daß die Schale zumindest im Bereich des Bodens und im Bereich der sich von dem Rand des Bodens erstreckenden Randfläche auf ihrer Innenseite eine Trennschicht, die durch eine Folie gebildet ist, aufweist. Durch die zwischen die Einbettmasse und die Form eingefügte Folie wird ein leichtes Lösen des ausgehärteten Einbettmaterials aus der Form ermöglicht. Diese Folie geht beim Aushärten, wenn überhaupt, nur eine Verbindung mit der aushärtenden Einbettmasse ein. Es wurde jedoch beobachtet, daß die Folie, insbesondere dann, wenn als Folie eine dünne Polyethylen-Folie eingesetzt wird, sich auch mit den Einbettmassen nicht verbindet. Dies kann eine Folge der unterschiedlichen Ausdehnungskoeffizienten der Form, der Folie und des Einbettmaterials sein. Die Folie ist bevorzugt bereits auf das Plattenmaterial, aus dem die Form beispielsweise tiefgezogen wird, aufgebügelt. Die Dicke der Folie sollte zwischen 10 bis 50 μm, bevorzugt 5 bis 10 μm, betragen.

Besonders gut geeignet ist eine Form aus Acrylglas oder Polyvinylchlorid, die sich durch ihre gute Lichtdurchlässigkeit einerseits und Formbeständigkeit andererseits auszeichnet, die aber noch ausreichend flexibel bleibt, um die ausgehärtete Einbettmasse aus der Form herauszudrücken.

Gerade im Hinblick auf eine gute Stabilität und dennoch ausreichende Elastizität im Bodenbereich sollte der Boden der Form eine runde oder ovale Außenkontur besitzen. Aus gleichem Grunde sollte die Randfläche der Form nach außen geneigt verlaufen, so daß sich die die Einbettmasse aufnehmende Wanne zu ihrer Öffnung hin erweitert. Als ausreichend hat sich hierbei ein Neigungswinkel der Randflächen zu der auf dem Boden der Form stehenden Lotrechten von 5° bis 30° erwiesen.

An den freien Rand der Randfläche kann sich ein nach außen zum Boden umgelegter Rand bzw. Randstreifen anschließen, wodurch der Rand der Form zusätzlich verstärkt wird. Auch dieser Rand sollte von der Folie, die den Wannenboden und die Randflächen auskleidet, bedeckt sein.

In einer bevorzugten Ausführung schließt sich an den Rand der Form eine Rinne an, die einerseits die Funktion des erwähnten umgelegten Randes übernehmen kann und andererseits dazu dient, aus dem Schalenbereich übertretendes Einbettmaterial aufzufangen. Hierdurch wird gleichzeitig eine von Form zu Form gleiche Menge bzw. Einfüllhöhe der eingefüllten Einbettmasse gewährleistet. Der besondere Vorteil einer solchen Rinne liegt darin, daß in die Rinne übergelaufenes Material in einfacher Weise abgebrochen werden kann, da sich das Einbettmaterial mit der Rinne, die ebenfalls mit der Folie ausgekleidet ist, nicht verbindet.

Falls der äußere Rinnenrand den inneren Rinnenrand in seiner Höhe überragend ausgebildet ist, ist ein erleichtertes Greifen und Einsetzen der Form in einen Träger oder direkt in ein Bestrahlungsgerät gegeben.

Die Wanddicke des Bodens der Form liegt bevorzugt im Bereich von 0,5 bis 1 mm. Die Randfläche sollte eine Höhe von 5 bis 15 mm, abhängig von den einzubettenden Präparaten, haben.

Weitere Einzelheiten und Merkmale der Erfindung ergeben sich aus der nachfolgenden Beschreibung eines Ausführungsbeispiels anhand der Zeichnung. In der Zeichnung zeigt:

Figur 1 eine Draufsicht auf eine erfindungsgemäß ausgestaltete Form zum Einbetten von Präparaten,

Figur 2 einen Schnitt entlang der Schnittlinie II-II der Figur 1,

Figur 3 eine Form für zwei Präparate,

Figur 4 einen Längsschnitt entlang der Schnittlinie IV-IV in Figur 3,

Figur 5 einen Querschnitt entlang der Schnittlinie V-V in Figur 3 und

Figur 6 einen Querschnitt mit einer in eine Halterung eingesetzten Form.

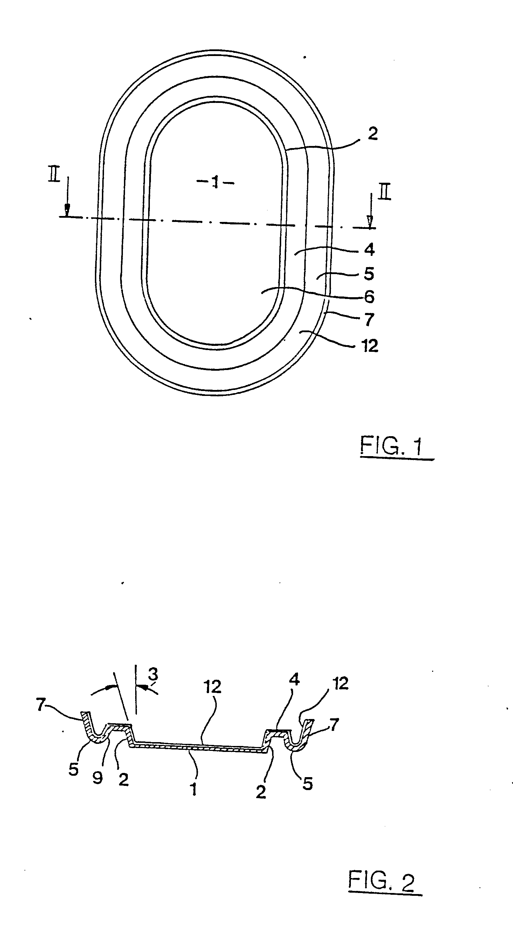

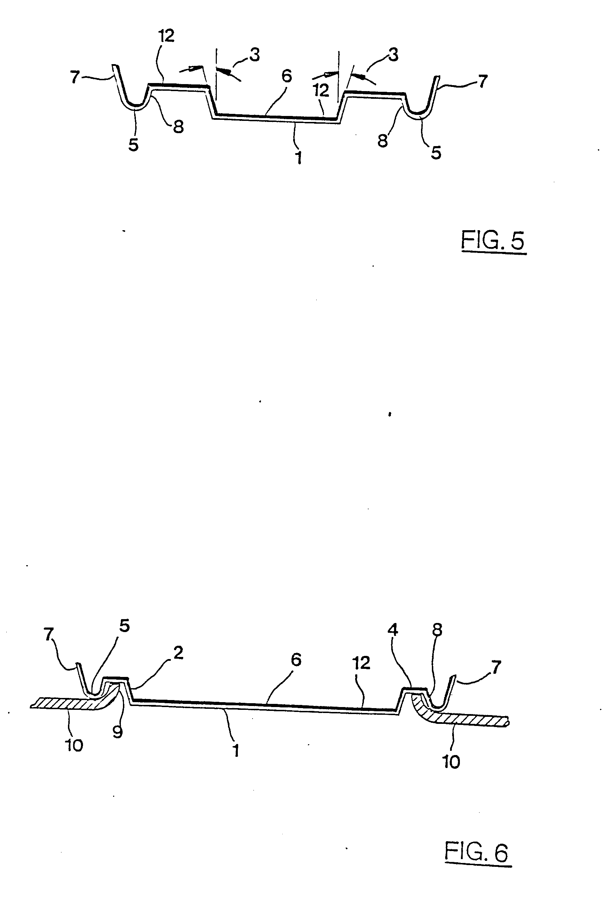

Die Form besitzt in den gezeigten Beispielen eine ovale Kontur des Bodens 1, an den sich nach außen geneigte Randflächen 2 anschließen. Die Neigung dieser Randflächen 2, durch den Winkel 3 in den in Figuren 2 und 5 angedeutet, beträgt 25°. An den Rand dieser Randflächen 2 schließt sich eine waagrecht verlaufende Fläche 4 an, an die eine umlaufende Rinne 5 angesetzt ist. Diese umlaufende Rinne 5 dient dazu, in den - schalenförmigen Bereich 6 eingefülltes, überlaufendes Einbettmaterial aufzunehmen, so daß von Form zu Form eine annähernd gleiche Dicke des ausgehärteten Einbettmaterials gewährleistet ist. Der äußere Rinnenrand 7 überragt den inneren Rinnenrand 8; durch diesen vorstehenden äußeren Rinnenrand 7 kann die Form leicht mit zwei Fingern erfaßt werden; außerdem gewährleistet dieser hochgezogene äußere Rinnenrand 7, daß kein Einbettmaterial aus der Form ausläuft.

In die durch die Randfläche 2, die waagrechte Fläche 4 und den inneren Rinnenrand 8 gebildete Vertiefung 9 kann sich, wie Figur 6 zeigt, ein über die Oberseite vorstehender Rand einer Halterung 10 einsetzen. Über den in die Vertiefung 9 eingreifenden Rand der Halterung 10 wird die jeweilige Form in der Halterung zentriert.

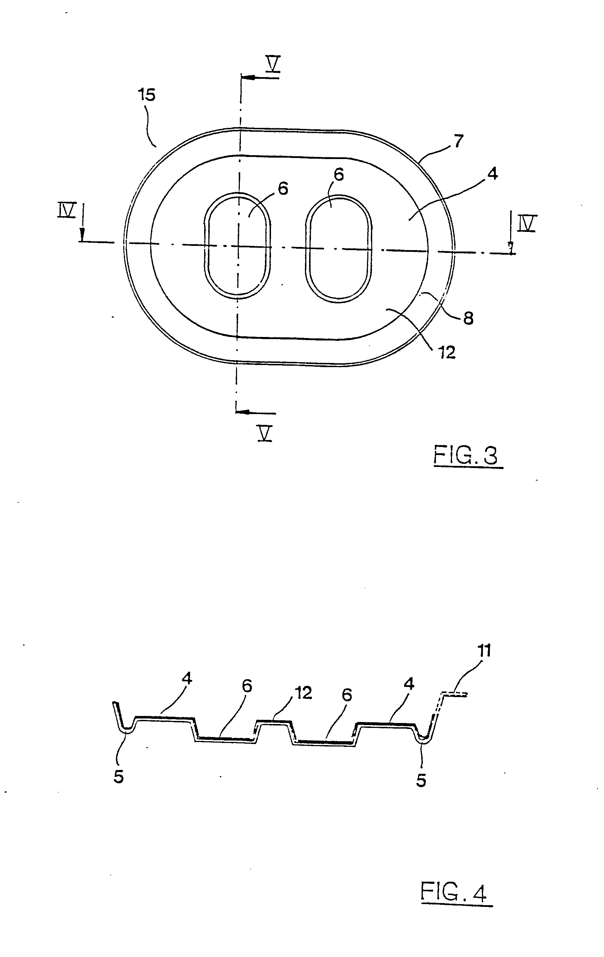

Im Gegensatz zu der Form nach den Figuren 1 und 2 weist die Form nach den Figuren 3 bis 6 zwei schalenförmige Bereiche 6, in die jeweils ein zu untersuchendes Präparat eingebettet werden kann, auf.

In Figur 4 ist an den äußeren Rinnenrand 7 eine zusätzliche Auflagefläche 11, durch unterbrochene Linien angedeutet, angesetzt, die, im Gegensatz zu der in Figur 6 gezeigten Ausführungsform, als Auflagerand entsprechend der waagrechten Fläche 4 dienen kann. Durch die Rinne 5 wird der Rand der Form verstärkt.

Die Innenseiten der Formen sind mit einer Trennschicht 12, die eine dünne Polyethylen-Folie von etwa 5 bis 10 μm ist, überzogen. Diese Trennschicht 12 bzw. Folie bedeckt sowohl den Boden 1 als auch die Randflächen 2 sowie die Innenseite der Rinne. Hierdurch wird gewährleistet, daß das in dem schalenförmigen Bereich ausgehärtete Einbettmaterial leicht nach seiner Aushärtung lösbar ist; ebenso geht das Einbettmaterial, das in die Rinne 5 übergelaufen ist, keine Verbindung mit der Form ein. Nach Herauslösen der ausgehärteten Einbettmasse kann das in der Rinne befindliche Material, das je nach Einfüllhöhe der Einbettmasse über einen Steg im Bereich der waagrechten Fläche 4 mit der Einbettmasse im Schalenbereich verbunden ist, abgebrochen werden.

Ein weiterer Vorteil der Folie liegt darin, daß durch die Folienoberfläche eine besonders glatte Oberfläche der Form bzw. der die Einbettmasse aufnehmenden Schale der Form erreicht wird.

Die Formen bestehen aus Acrylglas oder Polyvinylchlorid, das sich durch seine gute Lichtdurchlässigkeit einerseits und Formbeständigkeit andererseits auszeichnet.

Die Dicke 13 (Figur 6) der Form beträgt zumindest im Bereich ihres Bodens 1 etwa 0,8 mm, die Höhe 14 der Form bzw. der Randflächen 2 liegt bei 8 mm.

## Ansprüche

1. Form zum Einbetten von histologischen Präparaten in Kunststoffmassen mit einer Schale aus einem Boden und einem hochgezogenen Rand, die aus lichtdurchlässigem Material besteht, dadurch gekennzeichnet, daß die Schale zumindest im Bereich des Bodens (1) und im Bereich der sich von dem Rand des Bodens (1) erstreckenden Randfläche (2) auf ihrer Innenseite eine Trennschicht (12), die durch eine Folie gebildet ist, aufweist.

2. Form nach Anspruch 1, dadurch gekennzeichnet, daß die Trennschicht (12) eine dünne Polyethylen-Folie ist.

3. Form nach Anspruch 2, dadurch gekennzeichnet, daß die Folie eine Dicke von 10 bis 50 μm aufweist.

4. Form nach Anspruch 3, dadurch gekennzeichnet, daß die Dicke 5 bis 10 μm beträgt.

5. Form nach einem der Ansprüche 1 bis 4, dadurch gekennzeichnet, daß sie aus Acrylglas oder Polyvinylchlorid besteht.

6. Form nach einem der Ansprüche 1 bis 5, dadurch gekennzeichnet, daß der Boden (1) eine runde oder ovale Außenkontur besitzt.

7. Form nach Anspruch 1 bis 6, dadurch gekennzeichnet, daß die Randfläche (2) nach außen geneigt verläuft.

8. Form nach Anspruch 7, dadurch gekennzeichnet, daß der Neigungswinkel (3) der Randflächen (2) 5° bis 30° zu der auf dem Boden (1) stehenden Lotrechten beträgt.

9. Form nach einem der Ansprüche 1 bis 8, dadurch gekennzeichnet, daß sich an die Randflächen (2) ein nach außen zum Boden (1) hin umgelegter Rand anschließt.

10. Form nach Anspruch 9, dadurch gekennzeichnet, daß der umgelegte Rand eine Rinne (5) bildet.

11. Form nach Anspruch 9 oder 10, dadurch gekennzeichnet, daß der äußere Rinnenrand (7) höher ausgebildet ist als der innere Rinnenrand (8).

12. Form nach einem der Ansprüche 9 bis 11, dadurch gekennzeichnet, daß zumindest der Boden (1) eine Wanddicke (13) von 0,05 bis 1 mm aufweist.

13. Form nach einem der Ansprüche 9 bis 12, dadurch gekennzeichnet, daß die Randfläche (2) eine Höhe (14) von 5 bis 15 mm aufweist.

FIG. 1

FIG. 2

FIG.3

FIG.4

FIG. 5

FIG. 6